(19) Europäisches Patentamt
European Patent Office
Office européen des brevets

(11) **EP 1 915 293 B1**

(12) **EUROPEAN PATENT SPECIFICATION**

(45) Date of publication and mention
of the grant of the patent:
**25.08.2010 Bulletin 2010/34**

(51) Int Cl.:
***B64C 3/26*** *(2006.01)*     ***B64C 3/18*** *(2006.01)*

(21) Application number: **06724796.5**

(22) Date of filing: **11.05.2006**

(86) International application number:
**PCT/EP2006/004440**

(87) International publication number:
**WO 2007/019896 (22.02.2007 Gazette 2007/08)**

(54) **DOUBLE-SHELL DESIGN FOR WING CENTRE BOX**

FLÜGELMITTELKASTEN IN DOPPELSCHALENAUSFÜHRUNG

BOITE CENTRALE D'AILE A DOUBLE COQUE

(84) Designated Contracting States:
**DE FR GB IT SE**

(30) Priority: **17.08.2005 DE 102005038857**
**17.08.2005 US 709027 P**

(43) Date of publication of application:
**30.04.2008 Bulletin 2008/18**

(73) Proprietor: **Airbus Operations GmbH**
**21129 Hamburg (DE)**

(72) Inventor: **MÄNZ, Christian**
**22359 Hamburg (DE)**

(74) Representative: **Kopf, Korbinian Paul**
**Maiwald Patentanwalts GmbH**
**Elisenhof**
**Elisenstrasse 3**
**80335 München (DE)**

(56) References cited:
**BE-A- 434 808**     **US-A- 3 368 318**

**Description**

<u>Reference to related applications</u>

This application claims the benefit of the filing date of German Patent Application No. 10 2005 038 857.4 filed August 17, 2005 and of United States Provisional Patent Application No. 60/709,027 filed August 17, 2005.

<u>Field of the invention</u>

The present invention relates in general to the technical problem of buckling of shells. In particular, the invention relates to an implementation by means of which the danger of buckling of shells in the field of aircraft and space technology, and in particular in the field of aircraft wings, can be reduced.

In the context of the present invention the term "aircraft wing" is used in a wide sense. In particular, the term includes airfoils, horizontal tail units as well as rudder units. Furthermore, the term "centre box" as used in the present invention is used in a wide sense. While a centre box in the conventional technical sense is purely the load-bearing rigid component of a rudder unit, by way of which shearing force loads and bending loads in an aircraft fuselage can be carried away, in the context of the present invention the term "centre box" relates to the load-bearing component of any aircraft wing (airfoils, horizontal tail unit and rudder unit).

<u>Technological Background</u>

In aircraft, as a rule, the centre boxes of the aircraft wings are subjected to large loads. In particular, the centre boxes have to safely transfer to the fuselage the shearing force stress and the associated bending stress resulting from air loads. Since, as a rule, the centre boxes comprise two lateral surfaces that face each other, the bending load, to which a centre box is subjected, leads to compressive stress in the one lateral surface and to tensile stress in the other lateral surface. Since, as a rule, the lateral loads for reasons of weight reduction are very thin, compressive stress in the one lateral surface results in this one lateral surface tending to collapse, technically more precisely defined as buckling of shells. Since the increase in the shearing force stress is approximately linear from the wingtip to the base of the wing, and the bending stress accordingly increases approximately to the square, the danger of buckling of shells increases from the wingtip to the base of the wing where it reaches its maximum.

In order to counter the danger of buckling of shells, traditional centre boxes are designed in such a way that their lateral surfaces comprise ribs and stringers that are arranged across and transversely, which ribs and stringers comprise a one-sided external skin so that a reinforced shell is formed.

Since the centre boxes of aircraft wings have to be dimensioned so as to withstand buckling or buckling of shells, the respective lateral surfaces may only be subjected to lower loads than is the case with loads involving pure tensile stress and compressive stress. Such reduced loadability is due to the permissible material stress varying depending on the slenderness ratio of the respective lateral surface sections, wherein the load rating is reduced as the slenderness ratio is increased. Up to now, efforts have frequently been made to increase the permissible material stress by incorporating thickened parts in the external skin; however, this leads in an undesirable way to increased weight and poor material usage.

BE 434 808 discloses a hollow element for the application in aircraft, disclosing all the features of the preamble of claim 1.

<u>Summary of the invention</u>

Amongst other things, it may be an object of the present invention to provide a centre box for an aircraft wing, as defined by the features of claim 1, which centre box is less susceptible to buckling than is the case in a known centre box, as described above, of the same weight.

The present invention is based on the recognition that the danger of buckling of a lateral surface of a centre box can effectively be reduced in that the moment of inertia of the second degree of the lateral surface section that is susceptible to buckling is cleverly increased. While incorporating a single thickened part of the external skin also increases the geometrical moment of inertia of the second degree, such a thickened part aims to increase the size of the effective cross section rather than being able, indeed, to effectively increase the geometrical moment of inertia.

While the problem mentioned relates to the phenomenon of buckling of shells, nevertheless, below, the basic principle of the invention is to be explained with reference to the more easily understandable phenomenon of buckling, which in concrete terms can be referred to as a type of buckling of shells on a bar.

The load at which a bar that is articulately held on both ends so as to be articulated is calculated as follows

$$P_k = \frac{\pi^2 \cdot EI_y}{l^2}$$

wherein $E$ refers to the modulus of elasticity of the bar-shaped material, $I_y$ to the geometrical moment of inertia of the second degree in relation to the axis $y$ of the bar, and $l$ to the length of the bar.

$I_y$ in turn is calculated as follows

$$I_y = \int z^2 dA$$

wherein $z$ designates the distance from the centre of gravity of the cross-sectional surface of the bar.

As can be seen, surface sections located further away from the centre of gravity increase the geometrical moment of inertia to a larger extent than do surfaces arranged near the centre of gravity, because the distance to the centre of gravity changes to the square when calculating the geometrical moment of inertia. Thus, for example, if the external skin of a lateral surface is doubled, then in the case of an idealised T-shaped cross section comprising a web (stringer) and a flange (external skin) of a known lateral surface of a centre box this only moves the centre of gravity in the direction of the doubled external skin. While this also slightly increases the geometrical moment of inertia of the second degree, this increase in inertia is rather negligible because the additional new surface section is located near the resulting centre of gravity. To this extent the gain in stability or the increase in the buckle load that is achieved is only marginal.

The situation is different, however, if the additional surface section in a T-shaped cross section is not arranged on the already existing flange but instead on the free end of the web, as a second flange at which in a T-shaped cross section there is no flange as yet. In this arrangement the cross-sectional distance of the newly added surface has a significantly larger centre of gravity distance, which, moreover, also has to be taken into account to the square when calculating the geometrical moment of inertia of the second degree, so that the resulting geometrical moment of inertia in a T-shaped cross section is considerably greater when compared to simple doubling of the flange. Although the same amount of new surface has been added as is the case with simple doubling, in this way the geometrical moment of inertia of the second degree, and thus also the permissible buckling load, can be increased superproportionally.

Such adroit cross-sectional design also makes it possible to better utilise the permissible material stress because the slenderness ratio $\lambda$ of a bar has an influence on its permissible material stress. Thus, $\lambda$ is calculated as follows

$$\lambda = l / i$$

wherein $i$ designates the radius of inertia of the cross section of the bar.

Since the radius of inertia i is

$$i = \sqrt{I / A}$$

the geometrical moment of inertia of the second degree $I$ in turn directly influences the permissible material stress because according to the Euler buckling curve the permissible material stress is reduced hyperbolically as the slenderness ratio increases or the geometrical moment of inertia decreases. In concrete terms this means that a cross section with a large geometrical moment of inertia results in a low slenderness ratio with high permissible material stress so that the cross section or its material can be utilised well.

The invention makes use of the previously explained mechanical cross-sectional characteristics in that according to a first aspect the invention proposes a centre box for an aircraft wing, wherein the lateral surfaces of said centre box comprise two internal and external skin surfaces that are spaced apart from each other, wherein the internal skin may only be present in some sections. The centre box itself essentially comprises a first lateral surface, which planks the first side of the centre box, and a second lateral surface, which planks the second side of the centre box. In this arrangement the first lateral surface faces the second lateral surface so as to be spaced apart so that in this way the centre box is formed. In order to make use of the increase in the geometrical moment of inertia of the second degree, the first and/or the second lateral surfaces/surface comprise/comprises an internal skin and an external skin. Since, as previously explained, surfaces that are located away from the centre of gravity tend to make a substantial contribution to the geometrical moment of inertia of the second degree, the internal skin and the external skin are arranged so as to be spaced apart from each other by a space $s$ and are at least in points interconnected so as to be rigid under shear load so that a uniform cross section is created. In this way the buckling resistance of the lateral surfaces can be improved more effectively than would be the case if only a doubling of the external skin were to be implemented.

In order to interconnect the internal skin and the external skin of the lateral surfaces so as to be as rigid as possible under shear load, the respective lateral surface further comprises a multitude of webs that interconnect the internal skin with the external skin so that they are rigid under shear load. These webs can for example extend in a longitudinal direction of the centre box in which direction the bending stress across the centre box changes to the greatest extent.

According to a further aspect of the present invention the internal skin and the external skin can be interconnected by way of suitable profiles. For example a U-profile can be used for interconnecting the internal skin to the external skin so that they are rigid under shear load, wherein the respective flanges of said U-profile are connected to the internal skin and the external skin. As an alternative to this, Z-profiles or I-profiles can be used so as to interconnect the internal skin and the external skin so that they are rigid under shear load, in that again the respective flanges are attached to the internal skin and to the external skin. In this arrangement the respective profiles extend, so as to be almost parallel in relation to each other, in longitudinal direction of the centre box, in which direction the bending stress during flight changes to the greatest extent. Furthermore, hat profiles or trapezoidal profiles can be used for interconnecting the internal skin to the external skin. In this case it would be imaginable to do away with a separate internal skin because the hat profile or the trapezoidal profile can assume the function of the internal skin, i.e. the internal skin is formed by the flanges of the hat profile or trapezoidal profile, which flanges extend in sections.

In order to further reduce the danger of buckling of shells, apart from the longitudinally extending profiles, in addition a multitude of stiffener ribs between the internal skin and the external skin can be arranged, which stiffener ribs extend so as to be essentially transverse to the above-mentioned profiles. As has also already been mentioned, the internal skin and the external skin are arranged so as to be spaced apart from each other by a space $s$. Since the space $s$ has a direct influence on the distance of the respective internal skin or external skin from the centre of gravity of the ideal mathematical cross section, by varying the space $s$ optimisation of the lateral surfaces and in particular adaptation to the expected load conditions can take place. Since with increased bending stress acting into the centre box the compressive stress in the lateral surfaces, and thus also the danger of buckling of shells increases, the distance $s$ can increase in regions of increased bending load of the centre box. This means that the space $s$ in the base of an aircraft wing can be larger than it is in sections that are located further away from the fuselage. In this way a good material usage can always be achieved while at the same time the danger of buckling is reduced.

As a person skilled in the art will recognise when studying the above explanations, problems can be encountered when attaching the internal skin or the external skin to the intermediate profiles because, for attachment of the second skin, counter installation from the direction of the hollow space between the internal skin and the external skin is no longer possible. This difficulty in attaching the respective second skin can be overcome in that at least the respective second skin is attached by means of a multitude of blind rivets to the multitude of longitudinally extending profiles. In order to place such a blind rivet it is only necessary to have access to one side of the components to be connected, so that access to the hollow space between the internal skin and the external skin is not required.

Since the pressure loads in the lateral surfaces are often very large only locally, for example in the base of an aircraft wing, it is possible to arrange the internal skin only in regions so that it extends only partially in relation to the external skin. Thus, as a rule, it will not be necessary to provide the double-shell lateral surface construction according to the invention in the region of a wingtip, where the bending load is only modest. Instead, in many applications it will be adequate to provide the internal skin only along a length $h$ of the centre box, in which the centre box approaches the fuselage. Depending on the aircraft type and size, this length $h$ can vary greatly; it can for example range from ten to 50 per cent of the entire length of the aircraft wing. Of course, depending on the expected air loads, it is also possible to dimension the length $h$ so that it is shorter than 50%, namely approximately 40, 30 or only 20% of the entire length of the aircraft wing.

Since by way of the design according to the invention of a centre box the carrying capacity of aircraft wings can be increased considerably, according to a further aspect of the present invention an aircraft with a fuselage and at least one centre box is proposed, which centre box, at least in the connection region to the fuselage, is designed as described above. Due to the increased stability characteristics associated with a centre box according to the invention, significantly larger loads can be transferred from the aircraft wings to the fuselage, which makes it possible either to save weight when designing an aircraft for specified load situations, or to design significantly larger fuselages. The present invention thus opens up a completely new aircraft age with larger fuselages.

Short description of the drawings:

Below, the present invention is described in more detail with reference to the enclosed drawings. In the drawings:

Fig. 1 shows a perspective view of a lateral surface of a centre box according to the invention;

Fig. 2 shows a perspective view of a vertical tail unit with a centre box according to the invention; and

Fig. 3 shows two cross sections of a lateral skin of a centre box according to the invention.

The drawings are not to scale, but may reflect qualitative size relationships. In all the figures the same reference characters are used for identical or similar elements.

Detailed description of exemplary embodiments

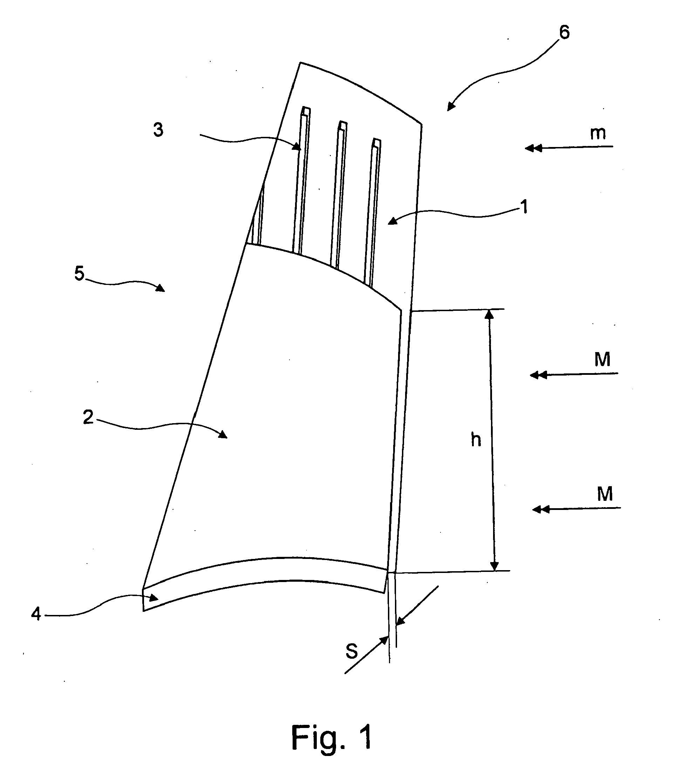

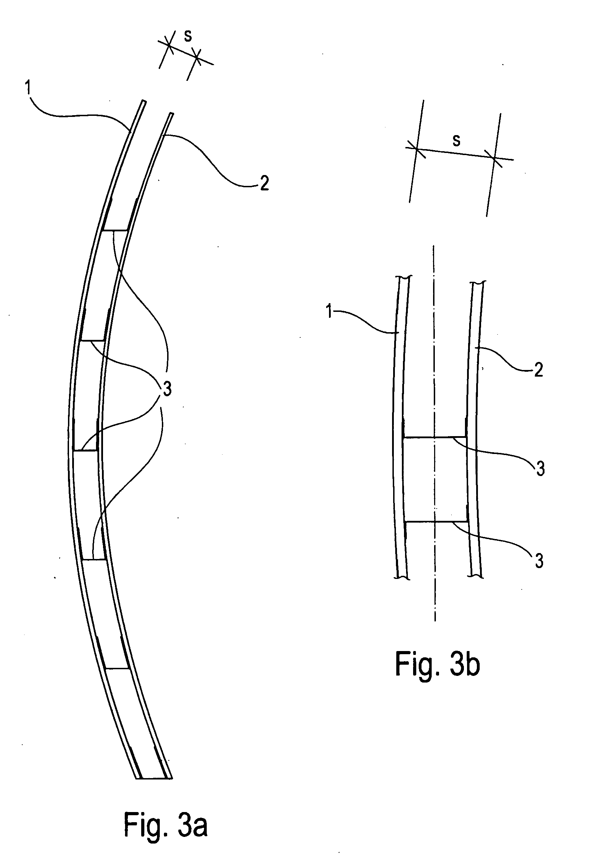

Fig. 1 shows a rear (when viewed from the direction of the viewer) lateral surface 5 of a centre box. As can be seen from the shape and orientation of the lateral surface 5, this is a lateral surface 5 of a centre box for the rudder unit of an aircraft. The lateral surface 5 comprises a rear (when viewed from the direction of the viewer) external skin 1 as well as a front internal skin 2. The external skin 1 and the internal skin 2 are spaced apart from each other by a distance $s$. Between the external skin 1 and the internal skin 2 several U-profiles 3 are arranged (see Fig. 3), whose webs comprise a height $s$. The U-profiles 3 thus space apart the internal skin 2 from the external skin 1, which skins are riveted to the flanges of the U-profiles 3 by way of blind rivets (not shown). While attachment with the use of blind rivets can be advantageous, the external skin or internal skin 1, 2 can also be attached to the profiles in some other way, for example by means of adhesive materials.

As is further shown in Fig. 1, the internal skin 2 does not extend to the full height of the external skin 1. Instead, the internal skin 2 only extends to a height $h$, in which the moment stress as a result of air load is particularly great, as indicated by the moment arrow symbols $M$. Large moment stress is particularly experienced at the base of the wing near the fuselage connection 4 of the centre box so that it is adequate to arrange the internal skin 2 only in this region, which depending on the type and size of the aircraft can vary between one and five metres, wherein any intermediate lengths $h$ are possible depending on the respective load situation.

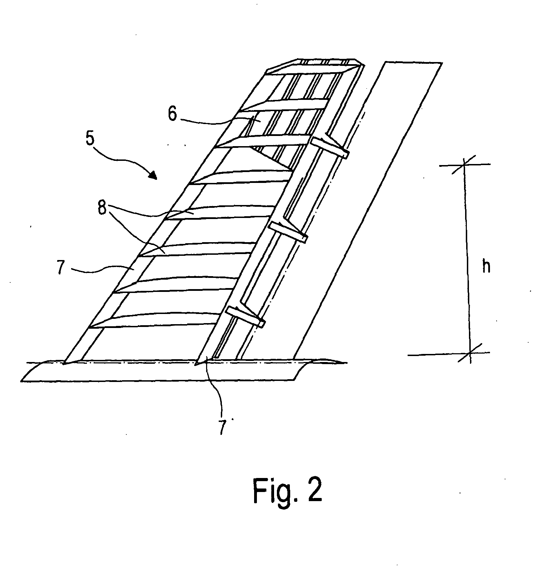

Fig. 2 shows a perspective view of a rudder unit with a centre box 5 according to the invention, whose lateral surfaces are designed as described above (see Fig. 1). As is shown, the centre box 5 is delimited by two spars 7 in the direction of flight, which spars 7 are laterally covered with the respective double-shell lateral surface design 5 according to the invention. In order to additionally stabilise the centre box 5, horizontally arranged ribs 8 extend between the two lateral surfaces 5.

Fig. 3a and 3b finally shows an enlarged cross-sectional view of the double-shell lateral surface 5 of Figs 1 and 2. As shown in Fig. 3a the external skin 1 is connected to the internal skin 2 by way of a multitude of U-profiles with a web height $s$. Instead of the U-profiles 3 it is also possible to use Z-profiles, as shown as an alternative in Fig. 3b. Likewise, hat profiles, trapezoidal profiles or I-profiles can be used for interconnecting the internal skin 2 to the external skin 1.

REFERNCE LIST

1 External skin

2 Internal skin

3 Profile

4 Fuselage connection

5 Centre box

6    Lateral surface

7    Spar

8    Rib

**Claims**

1. A centre box for an aircraft wing, comprising:

   a first lateral surface (6), which planks the first side of the centre box (5);
   a second lateral surface, which planks the second side of the centre box (5) and which faces the first lateral surface (6);
   wherein at least the first lateral surface (6) or the second lateral surface comprises an internal skin (2) and an external skin (1); and
   wherein the internal skin (2) and the external skin (1) are arranged so as to be spaced apart by a space $s$ and are at least in points interconnected so as to be rigid under shear load, **characterised in that**

   the space $s$ is variable and wherein the space $s$ in regions of increased bending load of the centre box (5) increases.

2. The centre box of claim 1,
   wherein at least the first lateral surface (6) or the second lateral surface further comprises a multitude of webs that interconnect the internal skin (2) and the external skin (1) so that they are rigid under shear load.

3. The centre box of claim 1,
   wherein at least the first lateral surface (6) or the second lateral surface further comprises a multitude of profiles (3) from the group comprising U-profiles, Z-profiles, 1-profiles, hat profiles or trapezoidal profiles that interconnect the internal skin (2) and the external skin (1) in longitudinal direction of the centre box (5) so that they are rigid under shear load.

4. The centre box of claim 3,
   wherein in a transverse direction relative to the multitude of longitudinally extending profiles (3) a multitude of stiffener ribs (6) extend.

5. The centre box of any one of claims 3 to 4,
   wherein at least the internal skin (2) or the external skin (1) is attached by means of a multitude of blind rivets to the multitude of longitudinally extending profiles (3).

6. The centre box of any one of the preceding claims,
   wherein the internal skin (2) extends only partially in relation to the external skin (1).

7. The centre box of claim 6,
   wherein the internal skin (2) is provided only along a length $h$ of the centre box (5), in which the centre box (5) approaches the fuselage.

8. The centre box of claim 7,
   wherein the length $h$ is dimensioned so that it is shorter than a length from a group of lengths comprising 50%, 40%, 30%, 20% and 10% of the entire length of the aircraft wing.

9. An aircraft comprising a fuselage and at least one centre box (5), which centre box, at least in the connection region to the fuselage, is designed as set out in any one of claims 1 to 8.

**Patentansprüche**

1. Mittelkasten für einen Flugzeugflügel, aufweisend:

eine erste Seitenfläche (6), die den Mittelkasten (5) an einer ersten Seite beplankt;

einer zweiten Seitenfläche, die den Mittelkasten (5) an einer zweiten Seite beplankt und die der ersten Seitenfläche (6) gegenüberliegt;

wobei zumindest die erste Seitenfläche (6) oder die zweite Seitenfläche eine Innenhaut (2) und eine Außenhaut (1) aufweist;

wobei die Innenhaut (2) und die Außenhaut (1) durch einen Abstand $s$ beabstandet zueinander angeordnet sind und zumindest punktuell schubsteif miteinender verbunden sind,

**dadurch gekennzeichnet, dass**

der Abstand s variabel ist und in Bereichen zunehmender Biegebelastung des Mittelkastens (5) zunimmt.

2. Mittelkasten gemäß Anspruch 1,

wobei zumindest die erste Seitenfläche (6) oder die zweite Seitenfläche ferner eine Vielzahl an Stegen aufweist, welche die Innenhaut (2) und die Außenhaut (1) schubsteif miteinander verbinden.

3. Mittelkasten gemäß Anspruch 1,

wobei zumindest die erste Seitenfläche (6) oder die zweite Seitenfläche ferner eine Vielzahl an Profilen (3) aus der Gruppe bestehend aus U-Profilen, Z-Profilen, I-Profilen, Hutprofilen oder Trapezprofilen aufweist, welche die Innenhaut (2) und die Außenhaut (1) in Längsrichtung des Mittelkastens (5) schubsteif miteinender verbinden.

4. Mittelkasten gemäß Anspruch 3,

wobei quer zu der Vielzahl sich längserstreckender Profile (3) eine Vielzahl an Versteifungsrippen (8) verläuft.

5. Mittelkasten gemäß einem der Ansprüche 3 bis 4,

wobei zumindest die Innenhaut (2) oder die Außenhaut (1) mittels einer Vielzahl an Blindniete an der Vielzahl sich längserstreckender Profile (3) angebracht ist.

6. Mittelkasten gemäß einem der vorgenannten Ansprüche,

wobei die Innhaut (2) sich nur teilweise gegenüber der Außenhaut (1) erstreckt.

7. Mittelkasten gemäß Anspruch 6,

wobei die Innhaut (2) nur über eine Länge $h$ des Mittelkastens (5), in der der Mittelkasten (5) sich dem Flugzeugrumpf nähert, vorgesehen ist.

8. Mittelkasten gemäß Anspruch 7,

wobei die Länge $h$ kleiner dimensioniert ist als eine Länge aus der Gruppe von Längen bestehend aus 50%, 40%, 30%, 20% und 10% der gesamten Länge des Flugzeugflügels.

9. Flugzeug, aufweisend einen Rumpf und zumindest einen Mittelkasten (5), welcher zumindest im Anschlussbereich zum Rumpf gemäß einem der Ansprüche 1 bis 8 ausgebildet ist.

**Revendications**

1. Caisson central pour une aile d'avion, comportant :

une première surface latérale (6), qui borde le premier côté du caisson central (5),

une seconde surface latérale, qui borde le second côté du caisson central (5) et qui fait face à la première surface latérale (6),

dans lequel au moins la première surface latérale (6) ou la seconde surface latérale comporte un revêtement intérieur (2) et un revêtement extérieur (1), et

dans lequel le revêtement intérieur (2) et le revêtement extérieur (1) sont agencés de manière à être séparés l'un de l'autre par un espace $s$ et sont au moins mutuellement reliés en des points de manière à être rigides sous une charge de cisaillement, **caractérisé en ce que**

l'espace $s$ est variable et l'espace $s$ augmente dans des zones dans lesquelles la charge de flexion du caisson central (5) augmente.

2. Caisson central selon la revendication 1,

dans lequel au moins la première surface latérale (6) ou la seconde surface latérale comporte en outre une multitude de réseaux qui relient mutuellement le revêtement intérieur (2) et le revêtement extérieur (1) de telle sorte qu'ils sont rigides sous une charge de cisaillement.

3. Caisson central selon la revendication 1, dans lequel au moins la première surface latérale (6) ou la seconde surface latérale comporte également une multitude de profilés (3) parmi le groupe comportant des profilés en U, des profilés en Z, des profilés en I, des profilés en forme de chapeau ou des profilés trapézoïdaux qui relient le revêtement intérieur (2) et le revêtement extérieur (1) dans une direction longitudinale du caisson central (5) de telle sorte qu'ils sont rigides sous une charge de cisaillement.

4. Caisson central selon la revendication 3, dans lequel une multitude de nervures de raidissement (6) s'étend dans une direction transversale par rapport à la multitude de profilés (3) s'étendant longitudinalement.

5. Caisson central selon l'une quelconque des revendications 3 à 4, dans lequel au moins le revêtement intérieur (2) ou le revêtement extérieur (1) est fixé à la multitude de profilés (3) s'étendant longitudinalement au moyen d'une multitude de rivets aveugles.

6. Caisson central selon l'une quelconque des revendications précédentes, dans lequel le revêtement intérieur (2) s'étend uniquement de manière partielle par rapport au revêtement extérieur (1).

7. Caisson central selon la revendication 6, dans lequel le revêtement intérieur (2) est agencé uniquement le long d'une longueur $h$ du caisson central (5), sur laquelle le caisson central (5) s'approche du fuselage.

8. Caisson central selon la revendication 7, dans lequel la longueur $h$ est dimensionnée de telle sorte qu'elle est plus courte qu'une longueur parmi un groupe de longueurs comportant 50 %, 40 %, 30 %, 20 % et 10 % de la longueur totale de l'aile d'avion.

9. Avion comportant un fuselage et au moins un caisson central (5), lequel le caisson central, au moins dans la zone d'assemblage au fuselage, est conçu tel qu'exposé dans l'une quelconque des revendications 1 à 8.

Fig. 1

Fig. 2

S

1

2

3

Fig. 3a

S

1

2

3

3

Fig. 3b

**REFERENCES CITED IN THE DESCRIPTION**

**Patent documents cited in the description**

- DE 102005038857
- US 60709027 B

- BE 434808